# EUROPEAN PATENT SPECIFICATION

(11) **EP 4 448 211 B1**
(45) Date of publication and mention of the grant of the patent: **12.08.2026**
(21) Application number: 22809218.5
(22) Date of filing: 22.11.2022
(51) Int. Cl.: B23K 26/322, B23K 26/211, B23K 26/24, B23K 35/30, B23K 101/18, B23K 103/04, B23K 101/34

(54) **METHOD FOR BUTT-WELDING TWO STEEL PARTS**
VERFAHREN ZUM STUMPFSCHWEISSEN ZWEIER STAHLTEILE
PROCÉDÉ DE SOUDAGE BOUT A BOUT DE DEUX PIÈCES EN ACIER

(30) Priority: 16.12.2021 WO PCT/IB2021/061816
(43) Date of publication of application: 23.10.2024
(73) Proprietor: ArcelorMittal, 1160 Luxembourg (LU)
(72) Inventor: CANOURGUES, Jean-François, 93150 Le Blanc-Mesnil (FR); GAIED, Sadok, 60740 Saint-Maximin (FR)
(74) Representative: Lavoix
(86) International application number: PCT/IB2022/061253
(87) International publication number: WO 2023/042189

(56) References cited:
- DE-A1- 102019 108 837

## Description

The present invention relates to a method for butt-welding two steel sheets having thicknesses, see claim 1.

Laser welded blanks are a widely used solution in the steel sheet metal forming industry, in particular in the automotive industry. It allows to combine in a same blank, several sub-blanks of different grades and thicknesses. This has many advantages: the optimal material properties and thickness are used in each area of the blank leading to optimized performance of the final part in terms of safety, weight, environmental footprint, etc. Furthermore, it allows designers to combine several parts into one. It also allows to maximize material use thereby reducing scrap, costs and environmental footprint. Overall, laser welded blanks simplify the overall production process, leading to productivity gains, cost savings and CO2 emissions reduction.

The emergence of new grades for cold stamping having very high strength and also very high formability presents new challenges to manufacture laser welded blanks. Indeed, higher strength higher formability grades come with more alloying elements, which lead to new properties, phenomena and failure risks in the weld seam**.**

DE 10 2019 108837 A1 describes, according to its abstract, the fusion welding of steel sheets made of press-hardenable steel, preferably manganese-boron steel, which involves the generation of a single laser focal point with different energy distribution in the metal pool through optical elements, in such a way that the laser focal point has a smaller laser focal spot area and a larger laser focal spot area. The larger laser focal point area irradiates an area which is at least 2 times the area irradiated by the smaller laser focal point area, and a higher laser energy output per unit area than in the larger laser focal spot area being introduced in the smaller laser focal spot area.

The current invention aims to address the issue of manufacturing laser welded blanks using steels having a high strength in such a way that the resulting laser welded blanks have a reliable resistance and formability and in such a way that the weld seam will not present a structural weakness of the ensuing part.

The object of the present invention is achieved by providing a method for butt-welding of two steel sheets according to claim 1, optionally comprising the features of claims 2 to 7.

The invention will be further described, referring to the following figures:
- Figure 1 is a schematic of a butt to butt welding operation using a laser source.
- Figure 2A represents the state-of-the-art method to test welded assemblies. Figure 2B represents the newly developed method to test welded assemblies.

A steel sheet refers to a flat sheet of steel. It has a top and bottom face, which are also referred to as a top and bottom side or as a top and bottom surface. The distance between said faces is designated as the thickness of the sheet. The thickness can be measured for example using a micrometer, the spindle and anvil of which are placed on the top and bottom faces. In a similar way, the thickness can also be measured on a formed part. The thickness of the steel sheets in the current invention is for example from 0.5 to 5.0mm, preferably from 0.5 to 4.0mm, even more preferably from 0.5 to 3.5mm.

Tailor welded blanks are made by assembling together, for example by laser welding together, several sheets or cut-out blanks of steel, known as sub-blanks, in order to optimize the performance of the part in its different areas, to reduce overall part weight and to reduce overall part cost.

The ultimate tensile strength, the yield strength and the elongation are measured according to ISO standard ISO 6892-1, published in October 2009. The tensile test specimens are cut-out from flat areas. If necessary, small size tensile test samples are taken to accommodate for the total available flat area on the part.

Hardness is a measure of the resistance to localized plastic deformation induced by mechanical indentation. It is well correlated to the mechanical properties of a material and is a useful local measurement method which does not require to cut out a sample for tensile testing. In the current invention, the hardness measurements are made using a Vickers indenter according to standard ISO 6507-1. The Vickers hardness is expressed using the unit Hv.

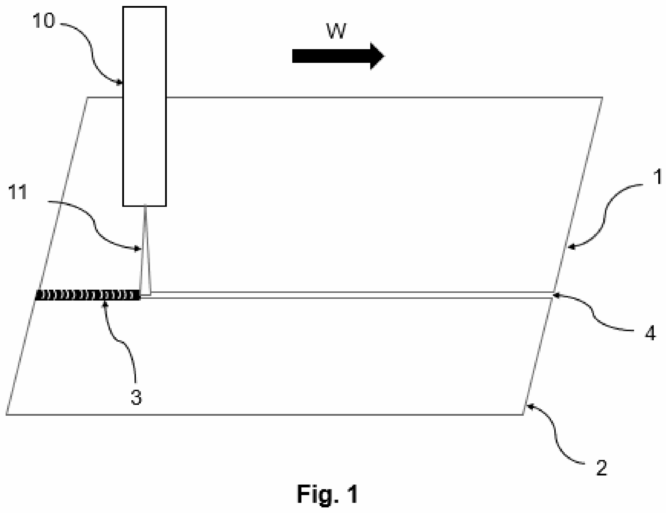

Referring to figure 1, butt to butt welding is a specific type of welding operation in which the two steel sheets to be welded 1, 2, are placed side by side along their respective edges and the weld seam 3 is created by melting the respective edges to form a melt pool containing a mixture of both steel sheets and possible external material used to support the welding process. The melt pool than solidifies to form a weld seam 1. Figure 1 represents the case of a laser butt to butt welding in which a laser source 10, emitting a laser beam 11 is used as the energy source to create the melt pool. The weld edges can be either rectilinear or curvilinear. The steel sheets to be welded and the energy source used to melt the steel sheets move relative to one another during the welding operation according to a direction W at a speed known as the welding speed. In a specific embodiment, a gap 4 can be left between the steel sheets 1, 2. This allows for example to incorporate a significant amount of additional material, such as filler wire, in the melt pool, without over-thickness of the weld seam. Such an over-thickness is considered as a geometric defect and would be detrimental to further processing of the welded blank, for example it would be detrimental to the stamping operation.

Laser welding designates a welding operation in which at least a laser source is used to provide the necessary energy to melt the steel sheets. In particular embodiments, other energy sources such as electric arcs, infrared heating etc can be associated to the laser source to provide the welding energy.

The quality of the weld seam in terms of geometric defect is defined by the European standard EN 10359:2015 entitled "Laser welded tailored blanks - Technical delivery conditions".

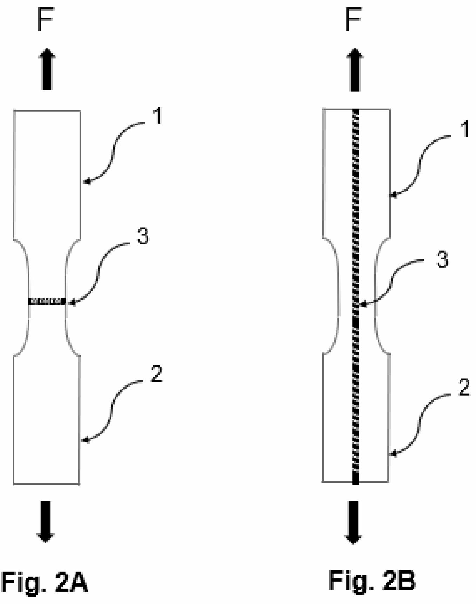

Figure 2A represents the state of the art of how the strength of a weld seam is currently evaluated. A tensile test sample is prepared in which the weld seam 3 joining the two steel sheets 1 and 2 is placed in the middle of the sample in the transverse direction compared to the tensile strength F. This well-established method gives a good evaluation of the relative strength of the different elements composing the samples, i.e. the two steel sheets 1, 2 and the weld seam 3. According to this method, a weld seam is considered sufficiently strong if the sample breaks outside of the weld seam. In other words, the weld seam is considered of good quality if it is at least harder than the weakest of the two steel sheets, which means that the weld is not the weak link in the assembly.

While the above described method gives a good evaluation of the pure mechanical strength of a weld seam, it does not in fact reflect the reality of the different deformation modes that a weld seam will undergo in real life conditions. When a laser welded blank is stamped, the weld seam undergoes deformations in all direction and not only in the transverse direction.

The inventors have found that when laser welding steel sheets, at least one of them having a high strength, for example a tensile strength above 590MPa, small cracks can be initiated perpendicular to the weld seam in areas in which the weld is submitted to deformations having a longitudinal component. Surprisingly, this type of crack is only observed for high strength steels and not for lower grades. The risk that this type of crack occurs cannot be evaluated using the above described method, because the behavior of the weld when deformed in the longitudinal direction is not at all tested in the traditional testing method. Furthermore, there is a statistical element associated with this type of cracking. For the same part geometry involving the same steel grades and the same laser welding parameters, some parts can be free of cracks while small cracks occur on other parts. This is due to the naturally occurring variations in steel sheet composition, welding process, stamping process etc. These small cracks are therefore not fully predictable, which is a further problem in an industrial setting, because they will be difficultly detected through quality control. Even though these cracks can be of small scale on the formed part, they represent a fatal weakness of the part and will lead to part failure during the life of the part, possibly causing serious safety issues.

The inventors have therefore developed a new methodology to evaluate the risk of these small cracks to occur. The inventors have found that when placing the weld seam in the longitudinal direction of the tensile sample, parallel to the tensile strength, as indicated on figure 2B, it is possible to witness the occurrence of small transverse cracks on laser welded assemblies involving at least one blank of high strength steel. Furthermore, the inventors have found that a good criterion to make sure that small cracks are not likely to occur in serial production is to perform a series of 10 tensile tests on longitudinally welded samples and to compare the uniform elongation of the welded assembly with the weighted average of the uniform elongation of each of the steel sheets. The inventors have found that the risk of crack occurrence is very low if the uniform elongation of the welded assembly Uweld is at least 50% that of the weighted average (Usheet1*th1+ Usheet2*th2)/(th1+th2) on all the 10 tensile tests performed, wherein th1 and th2 are the thicknesses of the steel sheets 1, 2 which are assembled and Usheet1, Usheet2, their respective uniform elongations.

In the rest of the description, when Uweld is lower than (Usheet1*th1+ Usheet2*th2)/(th1+th2), the test sample will be said to show a brittle failure - on the other hand if Uweld is higher than said weighted average, the test sample will be said to show a ductile failure.

Thanks to the above described newly developed statistical longitudinal testing of weld seams, the inventors were able to investigate the small crack issue on a large number of steel sheets. When observing cross sections of the failure zone of samples presenting small cracks, the inventors found that the fracture face presented a mixture of ductile and brittle features.

More specifically, the brittle feature portions were associated in some cases with typical fragile failure features and in some cases with dendritic shapes and some voids within the weld seam 3. These observations suggest that several mechanisms are at play in the formation of the small cracks all associated to how the weld pool solidifies. The dendrites and voids point out to shrinkage issues while the fragile fracture face points out to hot cracking issues, possibly associated with segregation issues during the solidification. In fact, without wanting to be bound by theory, it seems that the specific composition of high strength steel sheets, leading to a specific composition of the weld pool during welding, leads to specific solidification issues of the weld pool, which can lead to fragility of the weld seam.

Based on these observations, the inventors have found that small cracks were likely to occur when the unamended targeted chemistry of the weld seam 3 verified the following condition (concentrations are expressed in weight%):$Gamma > 0.39 %$ Wherein $Gamma = C + Si / 30 + Mn / 20 + 4.8 * P + 4 * S - Al / 20$

By unamended targeted chemistry of the weld seam it is meant the weighted average of all the chemical elements which enter into the weld seam. Considering two steel sheets 1 and 2, having thicknesses th1 and th2 and a concentration X1, X2 of the chemical element X, both possibly topped by metallic coatings having total double-sided thickness thcoat1 and thcoat2 and containing Xcoat1 and X coat2 of chemical element X, the unamended targeted weld seam chemistry Xweld_unamended for element X is given by: $Xweld _ unamended = \frac{th 1 ∗ X 1 + th 2 ∗ X 2 + thcoat 1 ∗ Xcoat 1 + thcoat 2 ∗ Xcoat 2}{th 1 + th 2 + thcoat 1 + thcoat 2}$

Thanks to these observations, the inventors were able to further solve the small crack issues in critical assemblies by adjusting the weld chemistry. This is done according to the present invention by adding an additional material addM to the weld pool through a filler wire.

Thanks to this additional material, the Gamma factor of the weld seam can be brought down to 0.39% or lower, which protects the weld assembly against the occurrence of small cracks.

More specifically, the amended targeted weld seam composition needs to be brought down to 0.39% or lower, using an additional material addM with an amount %addM of said additional material being incorporated in the weld seam 3.

In the presence of %addM of additional material addM having a concentration XaddM of chemical element X, the amended targeted weld seam chemistry Xweld_amended is defined by: $\begin{matrix}Xweld _ amended \\ = % addM ∗ XaddM + \left(1-%addM\right) \\ ∗ \frac{th 1 ∗ X 1 + th 2 ∗ X 2 + thcoat 1 ∗ Xcoat 1 + thcoat 2 ∗ Xcoat 2}{th 1 + th 2 + thcoat 1 + thcoat 2}\end{matrix}$

For example, the additional material addM has a composition which will have the effect of diluting the elements which have positive coefficients in the Gamma factor formula (C, Si, Mn, P or S) and thus bring down the Gamma factor. As can be seen from the array of Gamma's coefficients, the most critical elements are P and S, which are associated to dendritic defects, segregation and hot cracking issues. It will therefore be necessary to use additional material having very low concentrations in P and S. For example, the P content of the additional material is lower than 0.008wt%, more preferably lower than 0.006wt%, even more preferably lower than 0.004wt%.

The Gamma factor is adjusted, according to the present invention, by using an additional material containing a significant amount of aluminum. Indeed, aluminum has a negative coefficient in the Gamma factor formula and therefore, increasing the aluminum content of the weld seam will decrease its Gamma factor. The Al content of the additional material, according to the present invention, is higher than 1.0wt%, more preferably higher than 2.0wt%.

It is also possible to combine the two embodiments by using a filler wire containing a significant amount of aluminum and very low amounts of P and S.

Another important factor to be considered in all cases is the amount %addM of additional material addM which is used.

In order to increase the amount of additional material and to keep a good weld geometry, without detrimental defects such as an over-thickness of the weld due to an excess of material, it is possible to increase the gap 4 between the two sheets to be welded. For example, the gap between the sheets is increased above 0.1mm. For example, when using a gap of 0.1 mm or higher, the amount of filler wire is more than 15%.

By using a filler wire, the amount %addM of filler wire can be adjusted by tuning the ratio of the filler wire feeding speed and the welding speed.

When further using a metallic coating, paint, spray etc., the amount %addM can be adjusted by adjusting the thickness and overall volume of additional material which will be melted in the weld pool.

The characteristics of at least one of the steel sheets to be welded in terms of chemical composition, microstructure and mechanical properties corresponds to one of the line of the following table (the chemical composition is expressed in weight % and the balance is Fe and unavoidable impurities coming from the elaboration process, the %residual austenite in the microstructure of the steel sheet is expressed in surface% of a cross section, YP stands for the Yield Point expressed in MPa, UTS stands for the Ultimate Tensile Strength expressed in MPa, EI% is the elongation as measured according to the above mentioned ISO 6892 standard):

| %C | %Mn | %Si | %Al | %Cr | %Nb | %residual austenite | YP | UTS | El% |
|---|---|---|---|---|---|---|---|---|---|
| 0.11-0.15 | 1.1-1.8 | 0.5-0.9 | <0.05 | | | 1 - 10% | 330-440 | 590-700 | ≥26% |
| 0.13-0.18 | 1.1-1.8 | 0.5-0.9 | 0.6-1 | | | 10 - 15% | 330-440 | 590-700 | ≥26% |
| | | | | | | | | | |
| 0.15-0.25 | 2-2.8 | 0-0.4 | 0.2-1.2 | 0.01-0.5 | | 8 - 15% | 700-850 | 980-1130 | ≥13% |
| 0.1-0,5 | 1-3.4 | 0.5-2.5 | 0.03-1.5 | 0.05-1 | | 10 - 30% | 600-750 | 980-1130 | ≥19% |
| 0.15-0.23 | 1.4-2.6 | 0.6-1.5 | 0.02-1 | <0.3 | <0.035 | 10 - 20% | 600-750 | 980-1130 | ≥19% |
| 0.18-0.25 | 1.5-2.5 | 0.9-1.8 | 0.02-1 | 0.1-0.4 | 0.01-0.035 | 10 - 20% | 600-750 | 980-1130 | ≥19% |
| 0.15-0.25 | 1.8-3 | 1.2-2 | <0.1 | <0.5 | | 5 - 20% | 700-820 | 1050-1180 | ≥14% |
| 0.19-0.24 | 1.5-2.5 | 1.2-2 | 0.01-0.06 | 0.2-0.5 | | 10-15% | 850-1080 | 1180-1330 | ≥13% |
| 0.13-0.22 | 2.4-3 | 1.2-2.3 | 0.02-1 | | <0.05 | 9 - 13% | 850-1080 | 1180-1330 | ≥13% |
| | | | | | | | | | |
| 0.15 - 0.23 | 2-2.7 | 0.2 -1.6 | 0.02 - 1.2 | < 0.4 | < 0.035 | 3 - 15% | 850-1080 | 1180-1330 | ≥13% |

The Silicon content of at least one of the steel sheets to be welded is in the range (the lower and upper limit are included in the range) of 0.5% to 3.0%, preferably 0.9% to 3.0%, even more preferably 0.9% to 2.5%. Advantageously, Silicon acts to strengthen the steel and also stabilizes austenite so as to retain a portion of 5 austenite in the microstructure of the steel sheets at room temperature. This allows to reach a combination of very high mechanical properties and high elongation.

The Manganese content of at least one of the steel sheets to be welded is in the range (the lower and upper limit are included in the range) of 1% to 4%, preferably 1% to 3% even more preferably 2% to 3%. Advantageously, Manganese acts to strengthen the steel and also stabilizes the austenite so as to retain a portion of austenite in the microstructure of the steel sheets at room temperature. This allows to reach a combination of very high mechanical properties and high elongation.

The invention will now be illustrated by the following examples, which are by no way limitative.

Table 1 lists the steel compositions which were used in the following examples, along with the calculated gamma factor. The compositions are expressed in weight%.

**Table 1: steel compositions**

| **Steel reference** | **%C** | **%Mn** | **%P** | **%S** | **%Si** | **%Cu** | **%Ni** | **%Cr** | **%Al** | **%Mo** | **%V** | **%Nb** | **%B** | **%Ti** | **Gamma** |
|---|---|---|---|---|---|---|---|---|---|---|---|---|---|---|---|
| A | 0.19 | 2.47 | 0.0133 | 0.0010 | 1.76 | 0.01 | 0.01 | 0.03 | 0.03 | 0.004 | 0.003 | 0.002 | 0.0006 | 0.008 | 0.44 |
| B | 0.18 | 2.45 | 0.0138 | 0.0013 | 1.79 | 0.01 | 0.01 | 0.03 | 0.03 | 0.004 | 0.002 | 0.002 | 0.0005 | 0.008 | 0.43 |
| C | 0.18 | 2.45 | 0.0137 | 0.0014 | 1.78 | 0.01 | 0.01 | 0.03 | 0.03 | 0.004 | 0.002 | 0.002 | 0.0006 | 0.008 | 0.43 |
| D | 0.21 | 2.20 | 0.0128 | 0.0025 | 1.58 | 0.01 | 0.02 | 0.22 | 0.06 | 0.020 | 0.003 | 0.002 | 0.0005 | 0.004 | 0.44 |
| E | 0.19 | 2.26 | 0.0048 | 0.0010 | 1.70 | 0.01 | 0.00 | 0.02 | 0.01 | 0.004 | 0.002 | 0.002 | 0.0003 | 0.005 | 0.39 |
| F | 0.22 | 2.15 | 0.0079 | 0.0008 | 1.57 | 0.00 | 0.01 | 0.02 | 0.04 | 0.005 | 0.004 | 0.002 | 0.0004 | 0.007 | 0.42 |
| G | 0.22 | 1.96 | 0.0045 | 0.0013 | 1.12 | 0.01 | 0.01 | 0.19 | 0.56 | 0.004 | 0.004 | 0.032 | 0.0004 | 0.007 | 0.35 |
| H | 0.22 | 2.28 | 0.0066 | 0.0021 | 1.18 | 0.01 | 0.01 | 0.01 | 0.52 | 0.311 | 0.002 | 0.018 | 0.0004 | 0.005 | 0.39 |
| I | 0.18 | 2.24 | 0.0135 | 0.0019 | 1.56 | 0.01 | 0.03 | 0.20 | 0.03 | 0.005 | 0.013 | 0.002 | 0.0008 | 0.003 | 0.42 |
| J | 0.16 | 2.05 | 0.0125 | 0.0010 | 0.26 | 0.01 | 0.02 | 0.22 | 0.52 | 0.004 | 0.003 | 0.001 | 0.0006 | 0.008 | 0.31 |
| K | 0.11 | 2.55 | 0.0130 | 0.0010 | 0.82 | 0.01 | 0.01 | 0.30 | 0.34 | 0.006 | 0.049 | 0.015 | 0.0030 | 0.027 | 0.31 |

In the examples, the additional material addM is in the form of a filler wire. The filler wire compositions which were used are listed in table 2 with their associated computed gamma factor - compositions are expressed in weight%.

**Table 2: wire references**

| **Wire reference** | **%C** | **%Mn** | **%P** | **%S** | **%Si** | **%Al** | **Gamma** |
|---|---|---|---|---|---|---|---|
| 0 | 0.04 | 0.25 | 0.0030 | 0.0090 | 0.02 | 0.00 | 0.10 |
| 1 | 0.03 | 0.56 | 0.0076 | 0.0078 | 0.14 | 0.00 | 0.13 |
| 2 | 0.02 | 0.12 | 0.0083 | 0.0240 | 0.00 | 0.00 | 0.16 |
| 3 | 0.07 | 0.50 | 0.0075 | 0.0078 | 0.11 | 0.00 | 0.16 |
| 4 | 0.03 | 0.17 | 0.0073 | 0.0240 | 0.00 | 0.00 | 0.17 |
| 5 | 0.08 | 0.19 | 0.0058 | 0.0260 | 0.00 | 2.10 | 0.12 |
| 6 | 0.15 | 0.25 | 0.0100 | 0.0170 | 0.01 | 0.13 | 0.27 |
| 7 | 0.03 | 0.04 | 0.0091 | 0.0083 | 0.01 | 3.40 | -0.06 |

Welded assemblies were formed using the above listed steel compositions and filler wire compositions according to different modalities, which are detailed in table 3. The samples produced using the inventive process have a sample reference starting with I and the assemblies outside of the inventive process have a sample reference starting with R. Furthermore, in the case of samples produced outside of the invention, the parameter which is outside of the invention is underlined.

The type of failure of the weld was evaluated using the above described testing method on 10 welded assemblies where the weld is positioned in the longitudinal direction. The results of these tests are also reported in table 3.

**Table 3: welded assemblies and forming results**

| **Sample** | **Steel 1** | **Th1 (mm)** | **Steel 2** | **Th2 (mm)** | **Gap** | **Unamended gamma** | **Filler wire reference** | **filler wire % in weld** | **Amended gamma** | **small cracks occurrence?** |
|---|---|---|---|---|---|---|---|---|---|---|
| **R1** | A | 1,25 | A | 1,25 | <0.1mm | 0,44 | - | - | 0,44 | yes |
| **R2** | B | 1,25 | B | 1,25 | <0.1mm | 0,43 | - | - | 0,43 | yes |
| **R3** | C | 1,25 | C | 1,25 | <0.1mm | 0,43 | - | - | 0,43 | yes |
| **R4** | D | 1,46 | D | 1,46 | <0.1mm | 0,44 | - | - | 0,44 | yes |
| **R5** | F | 1,40 | F | 1,40 | <0.1mm | 0,42 | - | - | 0,42 | yes |
| **R6** | C | 1,25 | C | 1,25 | <0.1mm | 0,43 | 1 | 10% | 0,40 | yes |
| **R7** | C | 1,25 | C | 1,25 | <0.1mm | 0,43 | 2 | 10% | 0,40 | yes |
| **R8** | C | 1,25 | C | 1,25 | <0.1mm | 0,43 | 6 | 15% | 0,41 | yes |
| **R9** | C | 1,25 | C | 1,25 | <0.1mm | 0,43 | 0 | 5% | 0,41 | yes |
| **R10** | C | 1,25 | C | 1,25 | <0.1mm | 0,43 | 0 | 10% | 0,40 | yes |
| **I4** | C | 1,25 | C | 1,25 | <0.1mm | 0,43 | 5 | 15% | 0,38 | no |
| **I8** | I | 1,25 | I | 1,25 | <0.1mm | 0,42 | 7 | 15% | 0,35 | no |
| **R11** | E | 1,40 | E | 1,40 | <0.1mm | 0,39 | - | - | 0,39 | no |
| **R12** | G | 1,00 | G | 1,00 | <0.1mm | 0,35 | - | - | 0,35 | no |
| **R13** | H | 1,50 | H | 1,50 | <0.1mm | 0,39 | - | - | 0,39 | no |
| **R14** | J | 1,50 | J | 1,50 | <0.1mm | 0,31 | - | - | 0,31 | no |
| **R15** | K | 1,00 | K | 1,00 | <0.1mm | 0,31 | - | - | 0,31 | no |
| **R16** | J | 1,50 | K | 1,00 | <0.1mm | 0,31 | - | - | 0,31 | no |

The unamended targeted gamma factor of the weld seam is reported in table 3, as well as the amended targeted gamma factor of the weld seam. Note that in the case of assemblies in which no filler wire is used, the amended gamma factor is the same as the unamended gamma factor, which is obvious given the formulas for the amended and unamended gamma. Note also that all the samples that were used were uncoated or coated with metallic coatings which did not carry any of the elements included in the gamma factor, so that the metallic coating did not intervene in the gamma factor calculation.

The welded assemblies were all tested according to the above described novel longitudinal statistical testing method. In table 3, small cracks occurrence is reported to "yes" when at least one out of the 10 tensile test samples exhibited brittle failure and "no" when all the test samples exhibited ductile failure.

Assemblies R1 to R5, which are outside of the invention, have an unamended gamma which is above 0.39 and have not been welded using additional material so that their unamended gamma is also above 0.39, leading to the risk of small cracks occurrence.

Samples R6 to R9, which are outside of the invention, have an unamended gamma above 0.39 and were welded using additional material. However, the combination of the specific composition of the filler wires that were used and the quantity of filler wire that was added is not sufficient to bring the amended gamma factor below 0.39, so that the resulting assembly is still subject to a risk of small cracks occurrence.

On the other hand, samples I4 and I8, which are produced according to the inventive process, have an unamended gamma above 0.39 and, thanks to the addition of filler wire, have an amended gamma below 0.39, which leads to assemblies which are not prone to small cracks occurrence. More specifically, on sample I4, this improvement is brought on by using very low C, Mn, S and P filler wires in quantities of 15% or less and keeping a tight gap, below 0.1mm, between the two sheets.. Sample I8 is produced using a high aluminum content filler wire, which allows to bring down the amended gamma factor from 0.42 to 0.35. This is interesting because the filler wire composition which is used (wire 7), does not have such a low P content as the other filler wires used, which can be costly, but still manages to efficiently bring down the gamma factor and therefore prevent the risk of small cracks occurrence.

The remaining samples R11 to R16, which are outside of the invention, all have an unamended gamma factor which is below 0.39 thanks to the chemical composition of the steel sheets. They do not need additional material to obtain a risk free weld and are already devoid of small cracks without specific countermeasures.

In conclusion, by applying the process according to the invention, it is possible to produce weld assemblies with very high strength steels having a chemical composition which would lead to the risk of small cracks occurrence if no specific countermeasures were put in place.

## Claims

1. Method for butt-welding two steel sheets (1, 2) having thicknesses th1 and th2 comprising the steps of:
- A/ providing two steel sheets (1,2), at least one of them comprising Silicon in the range of 0.5 wt% to 3.0 wt% and Manganese in the range of 1.0% to 4.0%, and having a chemical composition and possibly a metallic coating such that the gamma factor of the unamended targeted weld seam composition is strictly higher than 0.39,
- B/ positioning said steel sheets side by side,
- C/ butt welding said steel sheets (1, 2) using at least a laser source (10) emitting a laser beam (11) and using additional material addM supplied in the formed of a filler wire and comprising more than 1.0 wt% Al, said additional material being incorporated in a weld seam (3) during the welding operation with an amount in weight% of %addM such that the gamma factor of the amended targeted weld seam composition is equal to or lower than 0.39,
Wherein for a given composition, the gamma factor is given by the following formula (all elements expressed in weight%): $Gamma = C + Si / 30 + Mn / 20 + 4.8 * P + 4 * S - Al / 20 ,$
Wherein for a given chemical element X, said two steel sheets (1) and (2), having a weight percentage X1, X2 of said chemical element X, both possibly topped by metallic coatings having total double sided thickness thcoat1 and thcoat2 and containing Xcoat1 and X coat2 in weight% of element X, the unamended targeted weld seam composition Xweld_unamended for element X is given by: $\begin{matrix}Xweld _ unamended \\ - \frac{th 1 ∗ X 1 + th 2 ∗ X 2 + thcoat 1 ∗ Xcoat 1 + thcoat 2 ∗ Xcoat 2}{th 1 + th 2 + thcoat 1 + thcoat 2}\end{matrix}$
And wherein for a given chemical element X, the amended targeted weld seam composition Xweld_amended in the presence of %addM amount of additional material addM having a weight percent XaddM of element X is: $\begin{matrix}Xweld _ amended \\ = % addM ∗ XaddM + \left(1-%addM\right) \\ ∗ \frac{th 1 ∗ X 1 + th 2 ∗ X 2 + thcoat 1 ∗ Xcoat 1 + thcoat 2 ∗ Xcoat 2}{th 1 + th 2 + thcoat 1 + thcoat 2}\end{matrix}$

2. Method of claim 1, wherein the two provided steel sheets (1,2) to be welded have a Silicon content in the range of 0.5 wt% to 3.0wt%.

3. Method according to claim 1 or 2 wherein the additional material addM contains less than 0.008wt% of P.

4. Method according to the previous claim wherein the additional material addM contains less than 0.006wt% of P.

5. Method according to the previous claim wherein the additional material addM contains less than 0.004wt% of P.

6. Method according to any one of the previous claims wherein the additional material addM contains more than 2.0wt% of Al.

7. Method according to any one of the previous claims wherein a gap (4) of at least 0.1mm is left between the sheets (1, 2) to be welded and the amount %addM of additional material addM in the weld seam (3) is equal to or higher than 15%.

## Patentansprüche

1. Verfahren zum Stumpfschweißen von zwei Stahlblechen (1, 2), die Dicke th1 und th2 aufweisen, umfassend die folgenden Schritte:
A) Bereitstellen von zwei Stahlblechen (1, 2), mindestens eines davon umfassend Silizium in dem Bereich von 0,5 Gewichts-% bis 3,0 Gewichts-% und Mangan in dem Bereich von 1,0 % bis 4,0 %, und eine chemische Zusammensetzung und möglicherweise eine metallische Beschichtung aufweist, sodass der Gamma-Faktor der unveränderten angestrebten Schweißnahtzusammensetzung strikt höher ist als 0,39,
B) Positionieren der Stahlbleche nebeneinander,
C) Stumpfschweißen der Stahlbleche (1, 2) unter Verwendung zumindest einer Laserquelle (10), die einen Laserstrahl (11) emittiert, und
unter Verwendung von Zusatzmaterial addM, das in Form eines Fülldrahts zugeführt wird und umfassend mehr als 1,0 Gewichts-% Al,
wobei das Zusatzmaterial während des Schweißvorgangs mit einer Menge in Gewichts-% von %addM in eine Schweißnaht eingebracht wird, sodass der Gamma-Faktor der veränderten angestrebten Schweißnahtzusammensetzung gleich wie oder kleiner als 0,39 ist,
wobei für eine gegebene Zusammensetzung, der Gamma-Faktor durch die folgende Formel gegeben ist (alle Elemente ausgedrückt in Gewichts-%): $Gamma = C + Si / 30 + Mn / 20 + 4 , 8 * P + 4 * S - Al / 20 ,$
wobei für ein gegebenes chemisches Element X die zwei Stahlbleche (1) und (2), die einen Gewichtsprozentsatz X1, X2 des chemischen Elements X aufweisen, beide möglicherweise mit metallischen Beschichtungen bedeckt sind, die eine gesamte doppelseitige Dicke thcoat1 und thcoat2 aufweisen und Xcoat1 und Xcoat2 in Gewichts-% des Elements X enthalten, wobei die unveränderte angestrebte Schweißnahtzusammensetzung Xweld_unamended für Element X gegeben ist durch: $\begin{matrix}Xweld _ unamended \\ - \frac{th 1 ∗ X 1 + th 2 ∗ X 2 + thcoat 1 ∗ Xcoat 1 + thcoat 2 ∗ Xcoat 2}{th 1 + th 2 + thcoat 1 + thcoat 2}\end{matrix}$
und wobei für ein gegebenes chemisches Element X die veränderte angestrebte Schweißnahtzusammensetzung Xweld_amended in Anwesenheit einer Menge von %addM des Zusatzmaterials addM mit einem Gewichtsprozentsatz XaddM des Elements X ist wie folgt ist: $\begin{matrix}Xweld _ amended \\ = % addM ∗ XaddM + \left(1-%addM\right) \\ ∗ \frac{th 1 ∗ X 1 + th 2 ∗ X 2 + thcoat 1 ∗ Xcoat 1 + thcoat 2 ∗ Xcoat 2}{th 1 + th 2 + thcoat 1 + thcoat 2}\end{matrix}$

2. Verfahren nach Anspruch 1, wobei die zwei bereitgestellten zu schweißenden Stahlbleche (1, 2) einen Siliziumgehalt in dem Bereich von 0,5 Gewichts-% bis 3,0 Gewichts-% aufweisen.

3. Verfahren nach Anspruch 1 oder 2, wobei das Zusatzmaterial addM weniger als 0,008 Gewichts-% P enthält.

4. Verfahren nach dem vorherigen Anspruch, wobei das Zusatzmaterial addM weniger als 0,006 Gewichts-% P enthält.

5. Verfahren nach dem vorherigen Anspruch, wobei das Zusatzmaterial addM weniger als 0,004 Gewichts-% P enthält.

6. Verfahren nach einem der vorherigen Ansprüche, wobei das Zusatzmaterial addM mehr als 2,0 Gewichts-% Al enthält.

7. Verfahren nach einem der vorherigen Ansprüche, wobei zwischen den zu schweißenden Blechen (1, 2) ein Spalt (4) von zumindest 0,1 mm belassen wird und die Menge %addM des Zusatzmaterials addM in der Schweißnaht (3) gleich wie oder größer als 15 % ist.

## Revendications

1. Procédé de soudage bout à bout de deux tôles d'acier (1, 2) ayant des épaisseurs th1 et th2 comprenant les étapes consistant à :
- A/ prévoir deux tôles d'acier (1, 2), au moins l'une d'elles comprenant du silicium dans la plage de 0,5 % massique à 3 % massique et du manganèse dans la plage de 1 % à 4 %, et ayant une composition chimique et éventuellement un revêtement métallique tels que le facteur gamma de la composition de cordon de soudure ciblée non modifiée est strictement supérieur à 0,39,
- B/ positionner lesdites tôles d'acier côte à côte,
- C/ souder bout à bout lesdites tôles d'acier (1, 2) à l'aide d'au moins une source laser (10) qui émet un faisceau laser (11) et à l'aide d'un matériau supplémentaire addM fourni sous la forme d'un fil d'apport et comprenant plus de 1 % massique de AI,
ledit matériau supplémentaire étant incorporé dans un cordon de soudure (3) pendant l'opération de soudage avec une quantité en pourcentage massique de %addM tel que le facteur gamma de la composition de cordon de soudure ciblée modifiée est égal ou inférieur à 0,39,
dans lequel, pour une composition donnée, le facteur gamma est donné par la formule suivante (tous les éléments étant exprimés en pourcentage massique) : $Gamma = C + Si / 30 + Mn / 20 + 4.8 * P + 4 * S - Al / 20 ,$
dans lequel, pour un élément chimique donné X, lesdites deux tôles d'acier (1) et (2) ayant un pourcentage massiqueX1, X2 dudit élément chimique X et étant toutes deux éventuellement recouvertes de revêtements métalliques ayant une épaisseur totale sur les deux faces thcoat1 et thcoat2 et contenant Xcoat1 et Xcoat2 en pourcentage massique de l'élément X, la composition de cordon de soudure ciblée non modifiée Xweld_unamended pour l'élément X est donnée par : $\begin{matrix}Xweld _ unamended \\ - \frac{th 1 ∗ X 1 + th 2 ∗ X 2 + thcoat 1 ∗ Xcoat 1 + thcoat 2 ∗ Xcoat 2}{th 1 + th 2 + thcoat 1 + thcoat 2}\end{matrix}$
et dans lequel, pour un élément chimique donné X, la composition de cordon de soudure ciblée modifiée Xweld_amended en présence d'une quantité %addM de matériau supplémentaire addM ayant un pourcentage massique XaddM de l'élément X est : $\begin{matrix}Xweld _ amended \\ = % addM ∗ XaddM + \left(1-%addM\right) \\ ∗ \frac{th 1 ∗ X 1 + th 2 ∗ X 2 + thcoat 1 ∗ Xcoat 1 + thcoat 2 ∗ Xcoat 2}{th 1 + th 2 + thcoat 1 + thcoat 2}\end{matrix}$

2. Procédé selon la revendication 1, dans lequel les deux tôles d'acier prévues (1, 2) à souder présentent une teneur en silicium dans la plage de 0,5 % massique à 3 % massique.

3. Procédé selon la revendication 1 ou 2, dans lequel le matériau supplémentaire addM contient moins de 0,008 % massique de P.

4. Procédé selon la revendication précédente, dans lequel le matériau supplémentaire addM contient moins de 0,006 % massique de P.

5. Procédé selon la revendication précédente, dans lequel le matériau supplémentaire addM contient moins de 0,004 % massique de P.

6. Procédé selon l'une quelconque des revendications précédentes, dans lequel le matériau supplémentaire addM contient plus de 2.0 % massique de Al.

7. Procédé selon l'une quelconque des revendications précédentes, dans lequel un espace (4) d'au moins 0,1 mm est laissé entre les tôles (1, 2) à souder et la quantité %addM de matériau supplémentaire addM dans le cordon de soudure (3) est égale ou supérieure à 15 %.
